# EUROPÄISCHE PATENTSCHRIFT

(11) **EP 4 201 744 B1**
(45) Veröffentlichungstag und Bekanntmachung des Hinweises auf die Patenterteilung: **13.08.2025**
(21) Anmeldenummer: 21216748.0
(22) Anmeldetag: 22.12.2021
(51) Int. Cl.: B60Q 1/50, B60Q 5/00

(54) **VERFAHREN UND SYSTEM ZUR REGELUNG DER LICHTEMISSION EINER FAHRZEUGLEUCHTE**
METHOD AND SYSTEM FOR CONTROLLING LIGHT EMISSION OF A VEHICLE LAMP
PROCÉDÉ ET SYSTÈME DE RÉGULATION DE L'ÉMISSION LUMINEUSE D'UNE LAMPE POUR VÉHICULE

(43) Veröffentlichungstag der Anmeldung: 28.06.2023
(73) Patentinhaber: VOLKSWAGEN AKTIENGESELLSCHAFT, 38440 Wolfsburg (DE)
(72) Erfinder: Lampe, Sebastian, 49205 Hasbergen (DE); Studeny, Christian, 38170 Schöppenstedt (Eitzum) (DE); Bussius, Annika, 38446 Wolfsburg (DE); Danov, Roman, 30171 Hannover (DE); Günther, Dr. Bert, 13589 Berlin (DE); Gutjahr, Karl-Wilhelm, 10781 Berlin (DE); Petermann-Stock, Dr. Ina, 38448 Wolfsburg (DE); Roth, Dr. Joscha, 30177 Hannover (DE); Thamm, Mathias, 39646 Oebisfelde (DE); Vogler, Sebastian, 38448 Wolfsburg (DE); Weng, Michael, 10559 Berlin (DE)

(56) Entgegenhaltungen:
- DE-A1- 102016 216 680
- DE-A1- 102018 220 791
- US-A1- 2020 342 757
- US-A1- 2021 114 514

## Beschreibung

Die vorliegende Erfindung betrifft ein Verfahren zur Regelung der Lichtemission einer Fahrzeugleuchte. Ferner betrifft die Erfindung ein System zur Regelung der Lichtemission einer Fahrzeugleuchte.

Fahrzeugleuchten dienen unter anderem dazu, den Verkehr auf Änderungen im Fahrverhalten aufmerksam zu machen und vor Gefahrensituationen zu warnen. Der rückwärtige Verkehr kann durch das Aufleuchten einer Bremsleuchte beispielswiese auf eine Bremsverzögerung des Fahrzeugs aufmerksam gemacht werden. Bei adaptiven Fahrzeugleuchten kann die Lichtemission entsprechend der Verkehrssituation angepasst werden. Hierdurch kann die Sichtbarkeit eines Fahrzeugs in einer potenziellen Gefahrensituation erhöht und damit die Verkehrssicherheit gesteigert werden. Beispielsweise kann zur Bremsleuchte bei einer Vollbremsung noch eine weitere Bremsleuchte zugeschaltet werden. Weiterhin können Umgebungsinformationen in die adaptive Anpassung mit einfließen. Eine Anpassung der Lichtemission einer Fahrzeugleuchte entsprechend der Verkehrssituation ist allerdings nicht immer eindeutig zu interpretieren.

Aus der WO 2020/087352 A1 ist ein Verfahren zur Steuerung eines Beleuchtungssystems eines Fahrzeugs bekannt. Umgebungsinformationen, wie Objekte in der Umgebung des Fahrzeugs und einen Abstand von einem Objekt in der Umgebung zu dem Fahrzeug, werden gesammelt und basierend auf diesen Umgebungsinformationen erfolgt eine automatische Einstellung des Beleuchtungssystems des Fahrzeugs. Eine künstliche Intelligenz kann eingesetzt werden, um die Umgebungsinformationen zu analysieren.

Die DE 10 2004 041 429 A1 beschreibt ein Verfahren zur Steuerung einer Nebelschlussleuchte eines Fahrzeuges, wobei anhand externer Daten automatisch ermittelt wird, ob die Nebelschlussleichte ein- oder ausgeschaltet oder in ihrem Schaltzustand belassen wird. Mittels eines durch künstliche Intelligenz ermittelten approximierten Zielschaltzustands wird bei Unterschreiten einer vorgegebenen Sichtweite durch einen automatischen Eingriff in die Motorsteuerung die Höchstgeschwindigkeit begrenzt.

Aus der WO 2020/013754 A1 ist ein Verfahren zum Steuern einer Fahrzeugbeleuchtungsvorrichtung bekannt. Dabei kann die Charakteristik der verschiedenen Scheinwerfer an das Wetter angepasst werden. Eine externe Leitstelle kann Aufgaben eines Bedieners über eine Benutzerschnittstelle empfangen und über eine künstliche Intelligenz durchführen.

Weitere Verfahren zur Regelung der Lichtemission einer Fahrzeugleuchte sind aus US2021/114514 A1 und DE102016216680 A1 bekannt.

Nachteilig an diesen Vorrichtungen und Verfahren ist es, dass trotz adaptiver Regelung der Lichtemission die Lichtfunktion der Lichtemission von anderen Verkehrsteilnehmern unzureichend wahrgenommen und interpretiert wird.

Der Erfindung liegt daher die Aufgabe zugrunde, ein Verfahren und eine Vorrichtung bereitzustellen, bei denen eine adaptive Lichtemission von anderen Verkehrsteilnehmern besser wahrgenommen und interpretiert wird.

Erfindungsgemäß wird diese Aufgabe durch ein Verfahren mit den Merkmalen des Anspruchs 1 und ein System mit den Merkmalen des Anspruchs 9 gelöst. Vorteilhafte Ausgestaltungen und Weiterbildungen sind in den abhängigen Ansprüchen angegeben.

Bei dem erfindungsgemäßen Verfahren wird ein in Lichtemissionsrichtung der Fahrzeugleuchte angeordneter Verkehrsteilnehmer erfasst. Die Lichtemission der Fahrzeugleuchte wird verändert, woraufhin Reaktionsdaten zur Reaktion des Verkehrsteilnehmers auf die Veränderung der Lichtemission erfasst werden. Prognosedaten, die angeben, welche Reaktion auf die veränderte Lichtemission erwartet wird, werden ermittelt. Die erfassten Reaktionsdaten werden mit den ermittelten Prognosedaten verglichen und bei einer Abweichung der Prognosedaten von den Reaktionsdaten wird ermittelt, durch welche Anpassung der Lichtemission der Fahrzeugleuchte eine Verringerung der Abweichung prognostiziert wird. Die Lichtemission der Fahrzeugleuchte wird entsprechend der ermittelten Anpassung geregelt.

Eine Lichtemissionsveränderung kann eine Schluss-, Brems-, Blink- und Rückfahrleuchte (SBBR) oder hochgesetzte Bremsleuchten, eine separate Blinkleuchte, eine Frontleuchte oder einen Nebenscheinwerfer betreffen. Der erfasste Verkehrsteilnehmer kann beispielsweise ein Fahrer eines anderen Kraftfahrzeugs, ein Fahrradfahrer oder ein Fußgänger sein. Dieser kann sich vor, hinter oder neben dem Fahrzeug in einem durch einen Erfassungsradius des Fahrzeugs definierten Abstand befinden.

Die Reaktionsdaten geben Informationen auf die Reaktion des erfassten Verkehrsteilnehmers auf eine Veränderung der Lichtemission. Sie können beispielsweise Daten einer Abstandsmessung zum anderen Verkehrsteilnehmer enthalten.

Prognosedaten beschreiben Daten, welche insbesondere während des Verfahrens erzeugt werden und Auskunft über das gewünschte Verhalten von Verkehrsteilnehmern als Reaktion auf eine Veränderung der Lichtemission beinhalten. Beispielsweise wäre bei einer Intensitätserhöhung der Bremsleuchte eine Abstandsvergrößerung zwischen dem Fahrzeug und dem erfassten Verkehrsteilnehmer zu erwarten.

Eine Abweichung der Prognosedaten von den Reaktionsdaten kann demnach beispielsweise dann vorliegen, wenn sich der Abstand nicht vergrößert hat, obwohl eine Abstandsvergrößerung aufgrund der veränderten Lichtemission zu erwarten wäre. Die Regelung der Lichtemission auf eine Veränderung der Lichtemission kann mehrmals hintereinander durchgeführt werden, bis die Abweichung der Prognosedaten von den Reaktionsdaten in einem Toleranzbereich liegt.

Das Verfahren passt die Einstellung der Fahrzeugleuchte vorteilhafterweise selbstständig anhand des Vergleichs der gemessenen Reaktionsdaten der Verkehrsteilnehmer und der Prognosedaten an.

Durch die Erfassung der Reaktionsdaten kann die Regelung vorteilhafterweise besser auf die individuellen Art und Weise angepasst werden, wie der erfasste Verkehrsteilnehmer reagiert. Beispielsweise erfasst ein erster Verkehrsteilnehmer einen Bremsvorgang des vorausfahrenden Fahrzeugs, bei welchem die Bremsleuchte mit geringer Lichtintensität leuchtet, sehr schnell weshalb keine weitere Anpassung nötig ist. Ein zweiter Verkehrsteilnehmer reagiert in einem solchen Fall beispielsweise langsamer. Da dann die Reaktionsdaten nicht mit den Prognosedaten übereinstimmen, erfolgt eine Regelung, beispielsweise eine Erhöhung der Intensität der Lichtemission der Bremsleuchte. Auf diese Weise muss der Fahrer vorteilhafterweise im Verkehrsfluss oder bei Gefahrensituationen nicht zusätzlich darauf achten, wie andere Verkehrsteilnehmer auf die Veränderung der Lichtemission des eigenen Fahrzeugs reagieren.

Nicht nur durch die manuelle Änderung der Lichtemission der Fahrzeugleuchte kann die Regelung gestartet werden. Sie wird auch dann aktiviert, wenn eine automatische Änderung der Lichtemission der Fahrzeugleuchte erfolgt ist; beispielsweise wenn eine Gefahrensituation erkannt wurde und die Lichtemission der Fahrzeugleuchte automatisch verändert wurde, und zwar noch bevor der Fahrer darauf reagiert hat.

Gemäß des erfindungsgemäßen Verfahrens werden Umgebungsdaten von der Umgebung des Fahrzeugs erfasst und mittels der Umgebungsdaten ein Level für die Gefahrenschwere in der Umgebung ermittelt. Bei der Veränderung der Lichtemission der Fahrzeugleuchte wird die Lichtintensität der Lichtemission der Fahrzeugleuchte in Abhängigkeit von der ermittelten Gefahrenschwere verändert, sodass die Lichtintensität der Lichtemission der Fahrzeugleuchte entsprechend des Levels der Gefahrenschwere angepasst wird.

Im Fahrzeug kann hierfür eine Frontkamera zur Beobachtung des Verkehrsumfeldes oder eine Sensorik zur Beobachtung des rückwärtigen Verkehrs, beispielsweise Heck-Radar, Ultraschall, Heck-Kamera oder LIDAR eingerichtet sein. Die relativen oder absoluten Positionen des Verkehrsteilnehmers können auch mit GPS Sensoren gemessen und übermittelt werden. Die Umgebungsdaten können somit beispielsweise Bilddaten einer Kamera, Messdaten eines LIDAR-Sensors, Messdaten eines Radarsensors und Messdaten eines Ultraschallsensors umfassen. Ergänzend können beispielsweise Messdaten eines Regensensors, Messdaten eines Helligkeitssensors, Messdaten eines Temperatursensors, Messdaten eines Luftfeuchtemessers und/oder Messdaten eines Luftdrucksensors berücksichtigt werden.

Mittels der Sensorik zum Erfassen der Umgebungsdaten kann insbesondere auch der andere, in Lichtemissionsrichtung der Fahrzeugleuchte angeordnete Verkehrsteilnehmer erfasst werden, und zwar unabhängig von der Ausstattung des Fahrzeugs des anderen Verkehrsteilnehmers. Ferner können hierdurch auch die Reaktionsdaten erfasst werden, d. h. die Reaktion des anderen Verkehrsteilnehmers auf eine Veränderung der Lichtemission.

Die Berechnung des Levels der Gefahrenschwere kann Informationen zu verzögerndem Verkehr, einem Stauende, einem Unfall, gestörte Sicht durch Nebel, erschwerte Fahrbedingungen durch Unwetter umfassen. Weiterhin können Informationen über die Geschwindigkeit des Fahrzeugs bzw. der anderen Verkehrsteilnehmer oder deren Abstand zueinander zur Berechnung herangezogen werden. Die einzelnen Informationen können zudem anhand ihrer Schwere kategorisiert werden. Beispielsweise kann der Abstand des Stauendes oder die Stärke des Nebels berücksichtigt werden. Aus den über die Umgebungsdaten ermittelten Informationen wird dann ein Level der Gefahrenschwere bestimmt.

Unter der Lichtintensität der Lichtemission der Fahrzeugleuchte wird in diesem Zusammenhang insbesondere der Lichtstrom verstanden, d. h. wie viel für das menschliche Auge wahrnehmbares Licht die Lichtquelle pro Zeiteinheit abstrahlt. Der Lichtstrom entspricht der physikalischen Strahlungsleistung, berücksichtigt jedoch zusätzlich die Empfindlichkeit des menschlichen Auges.

Wird die Lichtintensität der Lichtemission der Fahrzeugleuchte in Abhängigkeit von der ermittelten Gefahrenschwere verändert, bedeutet dies insbesondere, dass bei einer kleinen Gefahrenschwere eine niedrige Lichtintensität gewählt wird, bei einer großen Gefahrenschwere hingegen eine große Lichtintensität.

Vorteilhafterweise erkennt der Verkehrsteilnehmer durch die Anpassung der Lichtintensität an die Gefahrenschwere, welches Gefahrenlevel vorliegt. Ist beispielsweise die Ausgangsgeschwindigkeit gering, der Abstand groß und nur eine schwache Bremsung durch leicht verzögernden Verkehr erfolgt, wird eine niedrige Gefahrenschwere berechnet und eine niedrige Lichtintensität gewählt. Auf diese Weise werden abrupte Bremsvorgänge nachfolgender Verkehrsteilnehmern verhindert, die wiederum zu Unfällen führen können oder den Verkehrsfluss beeinträchtigen. Andererseits wird beispielsweise bei hohen Geschwindigkeiten, bei Unwetter und bei einem starken Bremsvorgang eine hohe Gefahrenschwere berechnet und eine hohe Lichtintensität gewählt. Auf diese Weise ist der Verkehrsteilnehmer gewarnt und kann einen stärkeren Bremsvorgang einleiten.

Ohne Zutun des Fahrers wird somit die Lichtemission vorteilhafterweise so geregelt, dass die Sichtbarkeit eines Fahrzeugs in einer Gefahrensituation erhöht wird und dass Warnungen und/oder Hinweise durch die sich ändernde Beleuchtung optimal erkannt werden, wodurch die Verkehrssicherheit erhöht werden kann.

Gemäß einer Weiterbildung des erfindungsgemäßen Verfahrens wird beim Verändern der Lichtemission der Fahrzeugleuchte die Lichtintensität von einer Ausgangslichtintensität bis zur Lichtemission entsprechend des Levels der Gefahrenschwere kontinuierlich gesteigert.

Unter einer kontinuierlichen Steigerung der Lichtintensität wird eine stetig monoton wachsende Veränderung der Lichtintensität verstanden. Beispielsweise wird bei einer Anpassung der Lichtemission in einer Gefahrensituation von niedrigem zu hohem Level der Gefahrenschwere nicht abrupt von geringer Lichtintensität zu hoher Lichtintensität erhöht, sondern kontinuierlich. Vorteilhafterweise wird der andere Verkehrsteilnehmer durch die starke Intensitätserhöhung nicht geblendet, es wird vermieden, dass er überrascht wird, wodurch die Unfallgefahr gesenkt wird.

Durch die adaptive Anpassung der Lichtintensität kann auch der dynamische Situationsverlauf übermittelt werden. Erkennt der Fahrer beispielsweise einen Stau und bremst langsam ab, wird nur mit geringer Lichtintensität, z. B. in Form von einer kleinen Leuchtfläche oder einer geringen Helligkeit, gewarnt. Wenn sich im Laufe dieses Abbremsvorgangs die Bremsstärke aber vergrößert, weil das Stauende für den Fahrer schneller als erwartet erscheint, wird mit erhöhter Bremsstärke die Intensitätsstufe kontinuierlich mit erhöht.

Die Anpassung der Lichtintensität kann auch das Frontlicht oder andere Fahrzeugleuchten betreffen, beispielsweise wenn der Verkehrsteilnehmer ein Fußgänger ist.

Gemäß einer weiteren Ausgestaltung des erfindungsgemäßen Verfahrens wird die Helligkeit in der Umgebung der Fahrzeugleuchte erfasst und bei der Veränderung der Lichtemission der Fahrzeugleuchte wird die Helligkeit der Lichtemission der Fahrzeugleuchte so verändert, dass ein bestimmter Kontrast zwischen der Helligkeit der Lichtemission der Fahrzeugleuchte zu der erfassten Helligkeit in der Umgebung der Fahrzeugleuchte erzielt wird.

Die Umgebungshelligkeit kann mit Sensoren am Heck des Fahrzeugs sowie im gesamten Verkehrsumfeld, insbesondere im Bereich des rückwärtigen Verkehrs gemessen werden.

Beim Vergleich der Umgebungshelligkeit zur Helligkeit der Lichtemission der Fahrzeugleuchte kann zwischen diesen ein Kontrast bestimmt werden. Unter Kontrast ist der Intensitätsunterschied zwischen der Umgebungshelligkeit und der Helligkeit der Lichtemission der Fahrzeugleuchte zu verstehen.

Die Helligkeit der Lichtemission der Fahrzeugleuchte ist dabei insbesondere die Leuchtdichte der Lichtaustrittsfläche der Fahrzeugleuchte. Die Leuchtdichte berücksichtigt die Orts- und Richtungsabhängigkeit des von der Fahrzeugleuchte abgegebenen Lichtstroms. Sie gibt an, mit welcher Flächenhelligkeit das Auge eine Fläche der Fahrzeugleuchte wahrnimmt.

Vorteilhafterweise sollte der Verkehrsteilnehmer die Lichtemission der Fahrzeugleuchte eindeutig erkennen, der Kontrast sollte also entsprechend hoch sein. Ein zu hoher Kontrast ist allerdings hinderlich, da dies den Verkehrsteilnehmer blenden könnte.

Dementsprechend wird bei einer hohen Umgebungshelligkeit, beispielsweise durch intensiven Sonnenschein, die standardmäßig eingestellte Helligkeit der Lichtemission der Fahrzeugleuchte nur einen niedrigen Kontrast erzielen. Der Verkehrsteilnehmer kann die Lichtemission der Fahrzeugleuchte somit schlechter wahrnehmen. Um die Erkennbarkeit der Fahrzeugleuchte zu verbessern, ist eine Erhöhung der Helligkeit notwendig. Dadurch ist gewährleistet, dass die Signalfunktion der Fahrzeugleuchte, insbesondere während einer Gefahrensituation, gewährleistet werden kann. Ein Blenden des Verkehrsteilnehmers ist unwahrscheinlich, dieser ist durch die intensive Sonneneinstrahlung bereits an die Helligkeit gewöhnt.

Umgekehrt wird bei einer niedrigeren Umgebungshelligkeit, beispielsweise durch Dämmerung oder Dunkelheit bei Nacht oder in einem Tunnel die standardmäßig eingestellte Helligkeit der Lichtemission der Fahrzeugleuchte einen sehr hohen Kontrast erzielen. Um ein Blenden des Verkehrsteilnehmers zu vermeiden, ist eine Verringerung der Helligkeit notwendig. Insbesondere bei Stillstand des Fahrzeugs während eines Staus oder beim Fahren in Kolonnensituation wäre dieses dauerhafte Blenden störend. Die Helligkeit wird dennoch so groß gewählt, dass weiterhin gewährleistet ist, dass die Fahrzeugleuchte erkannt wird.

Gemäß einer Weiterbildung des erfindungsgemäßen Verfahrens wird ein definierter Kontrast in Anhängigkeit von dem Level der Gefahrenschwere eingestellt, wobei bei einem höheren Level der Gefahrenschwere ein höherer Kontrast eingestellt wird.

Die Anpassung des Kontrastes in Abhängigkeit der Gefahrenschwere kann mit der Anpassung des Kontrastes in Abhängigkeit der Umgebungshelligkeit gekoppelt werden. Um einen definierten Zielkontrast zu erzeugen, der der entsprechenden Gefahrenschwere entspricht, ist entsprechend bei großer Umgebungshelligkeit, beispielsweise am Tag, eine höhere Helligkeit notwendig als z.B. in der Nacht oder bei Tunneldurchfahrten.

Dies wird beispielsweise mit einer Kontrast-Matrix realisiert, in der die verschiedenen Kombinationen aus geringer und hoher Helligkeit und geringer und hoher Gefahrenschwere mit entsprechenden Kontrasten belegt werden. Beispielsweise würde bei einer hohen Umgebungshelligkeit und einer hohen Gefahrenschwere ein maximaler Kontrast eingestellt werden, das heißt die Helligkeit der Fahrzeugleuchte wäre entsprechend hoch. Dies würde eine hohe Signalwirkung erzielen, um den Verkehr optimal zu warnen. Bei niedriger Umgebungshelligkeit, beispielsweise in einem Tunnel, und bei geringer Gefahrenschwere würde hingegen eine minimale Signalwirkung ausreichen, um den Verkehrsteilnehmer zwar zu informieren aber nicht zu blenden oder zu überraschen.

Fälle mittlerer Umgebungshelligkeit und mittlerer Gefahrenschwere, werden entsprechend angepasst. Der vorteilhafte Effekt für den Verkehrsteilnehmer kann somit für alle Umgebungshelligkeiten und Gefahrenschweren genutzt werden.

Gemäß einer Weiterbildung des erfindungsgemäßen Verfahrens weist die Fahrzeugleuchte eine Fläche mit einer Vielzahl von Leuchtmitteln auf und die Lichtintensität wird über die Helligkeit und/oder die leuchtende Fläche der Fahrzeugleuchte angepasst. Die Veränderung der Lichtemission kann somit durch eine Intensitätsveränderung der Lichtemission erreicht werden, also eine Veränderung der Leuchtdichte, also einem veränderten Strahlungsfluss pro Fläche, oder durch eine größere Fläche mit gleicher Leuchtdichte umgesetzt werden.

Die Vielzahl von Leuchtmitteln kann insbesondere eine Vielzahl von lichtemittierenden Dioden (LED) sein. Die Lichtintensität kann dann insbesondere durch eine adaptive Intensitätssteuerung in den einzelnen LEDs verändert werden.

Die Fahrzeugleuchte kann außerdem einzelne LEDs umfassen, von denen einige zu Teilbereichen der jeweiligen Beleuchtungseinrichtung zusammengefasst werden können. Beispielsweise kann die Rückleuchte aus mehreren separaten Teilkomponenten bestehen. Je nachdem welche Signalwirkung erzielt werden soll, kann die Leuchtfläche verkleinert oder vergrößert werden. Eine Vergrößerung der Leuchtfläche wird durch einzeln ansteuerbare Leuchtflächenelemente der jeweiligen Beleuchtungseinrichtung realisiert.

Zusätzlich oder alternativ zur Helligkeit einer definierten Fläche der Fahrzeugleuchte kann auch die Größe der leuchtenden Fläche der Fahrzeugleuchte angepasst werden. Diese kann sowohl entsprechend des Kontrastes und/oder entsprechend des Levels der Gefahrenschwere angepasst werden.

Beispielsweise wird bei einer geringen Gefahrenschwere eine kleine Leuchtfläche aktiviert, bei einer hohen Gefahrenschwere wird eine große Leuchtfläche aktiviert. Die Warnwirkung ist intuitiv bei größerer Leuchtfläche höher. Somit kann der Verkehr bei einer hohen Gefahrenschwere, die beispielsweise mit einer erhöhten Aufprallgefahr einhergeht, besser gewarnt werden. In diesem Fall wird die Helligkeit der Leuchtfläche nicht geändert.

Bevorzugter Weise können beide Veränderungen der Lichtemission der Fahrzeugleuchte, also eine Änderung der Helligkeit und eine Änderung der Größe der Leuchtfläche der Fahrzeugleuchte kombiniert werden. Die Anpassung kann wiederum sowohl in Abhängigkeit von dem Kontrast als auch in Abhängigkeit von dem Level der Gefahrenschwere erfolgen. Beispielsweise wird bei einer hohen Gefahrenschwere in heller Umgebung sowohl eine große Leuchtfläche aktiviert als auch eine erhöhte Helligkeit eingestellt.

Beim Verändern der Lichtemission der Fahrzeugleuchte kann die Leuchtfläche von einer Ausgangslichtfläche bis zur Zielleuchtfläche entsprechend des Levels der Gefahrenschwere kontinuierlich gesteigert werden.

Für unterschiedliche Warnsituationen und Warnstufen stehen somit unterschiedliche Signalkombinationen zur Verfügung, die der Verkehrsteilnehmer intuitiv mit der vorliegenden Situation verknüpfen kann.

Gemäß einer weiteren Ausgestaltung des erfindungsgemäßen Verfahrens wird zum Ermitteln der Prognosedaten ein Verfahren des maschinellen Lernens eingesetzt. Durch den Einsatz eines Verfahrens des maschinellen Lernens ist es vorteilhafterweise möglich, besonders zuverlässige Prognosedaten zu ermitteln.

Gemäß einer Weiterbildung des erfindungsgemäßen Verfahrens werden Reaktionsdaten in einer Datenbank gespeichert und die Reaktionsdaten der Datenbank für das Training des Parametersatzes des Verfahrens des maschinellen Lernens zum Ermitteln der Prognosedaten verwendet.

Vor dem Einsatz des Verfahrens, beispielsweise vor Auslieferung des Fahrzeugs, wird z. B. eine künstliche Intelligenz trainiert, wobei Reaktionsdaten von Fahrern auf unterschiedlichste Fahrsituationen gesammelt und in einer Datenbank abgelegt werden und diese für das Training verwendet werden. Während des Verfahrens kann mittels der künstlichen Intelligenz, die das Maschinenlernverfahren verwendet, in Echtzeit ermittelt werden, welche Reaktion auf welche Fahrsituationen erwartet wird, um daraus die Prognosedaten zu erstellen. Neben der eigentlichen Reaktion des Fahrers fließen in das Verfahren des maschinellen Lernens insbesondere auch verschiedenste Umgebungsfaktoren ein. Das Verfahren kann somit für eine Vielzahl von Fahrsituationen verlässliche Prognosedaten erstellen, auch für solche, die nicht direkt vorab ermittelt und in der Datenbank gespeichert wurden.

Eine weitere Möglichkeit der Erstellung der Datenbank zur Bestimmung der Prognosedaten ist das ständige Speichern von aktuellen Reaktionsdaten während der Benutzung des Fahrzeugs bzw. während der Verwendung des Verfahrens. Der für das Training des Maschinenlernverfahrens zur Verfügung stehende Datensatz wird also bei jeder Verwendung des Verfahrens erweitert. Somit kann die Bestimmung der Prognosedaten ständig verbessert werden, dies führt zu einer optimierten Einstellung der Fahrzeugleuchte und somit zu einer sichereren Fahrsituation.

Die Datensätze, die vor der Verwendung des Verfahrens zum Ermitteln der Prognosedaten verwendet worden sind, können jeweils mit den aktuellen Datensätzen kombiniert werden. So können im Vorfeld schon bestimmte Fahrsituationen, insbesondere auch seltene Situationen, in die Datenbank aufgenommen werden, die Datensätze zudem aber auch immer wieder um aktuelle Fahrsituationen erweitert werden. Beispielsweise werden so auch neue Entwicklungen in Verkehrssituationen oder unbekannte Umgebungen mit einbezogen.

Die Verwendung einer künstlichen Intelligenz, die das Verfahren des maschinellen Lernens verwendet, ermöglicht also eine automatische Erkennung verschiedenster Umgebungsfaktoren und eine Gesamtoptimierung der Einstellungen. Sie lernt, bei welchen Situationen welche Lichteinstellung am besten ist. Die Situationen setzen sich hierbei aus Lichtverhältnissen, dem umgebenden Verkehr, der Handlung des Fahrers und weiteren Umgebungsfaktoren zusammen. Der auf künstlicher Intelligenz basierte Algorithmus kann insbesondere aus dem Verhalten der Verkehrsteilnehmer auf die Beleuchtung lernen. Hierzu gehören beispielsweise eine schnelle Reaktion oder gar keine Reaktion oder Fahrfehler durch Blenden.

Die große Menge an Daten von verschiedenen Sensoren kann somit vorteilhafterweise genutzt werden. Es wird sichergestellt, dass die Fahrzeugbeleuchtung schnell angepasst werden kann, und die Anpassung so geregelt ist, das ein intuitives Signal für den Fahrer und den rückwärtigen Verkehr erzeugt wird.

Die Informationen der Umgebungsdaten können für das Verfahren des maschinellen Lernens genutzt werden, um aus den Umgebungsdaten den Level der Gefahrenschwere zu bestimmen.

Die künstliche Intelligenz lernt aus den Reaktionsdaten, ob die Einschätzung der Gefahrenschwere und damit die Einstellung der Fahrzeugleuchte zum gewünschten Ergebnis geführt hat oder ob der Level der Gefahrenschwere falsch eingeschätzt worden ist.

Gemäß einer weiteren Ausgestaltung des erfindungsgemäßen Verfahrens werden die Reaktionsdaten aus übermittelten Daten über eine direkte Kommunikation zwischen Fahrzeugen (Car2Car-Kommunikation) ermittelt. Auf diese Weise kann zum Beispiel die Bremsaktivität und/oder das Lenkverhalten des erfassten Verkehrsteilnehmers und/oder können die Augenbewegungen des Fahrers des erfassten Verkehrsteilnehmers direkt übermittelt werden.

Alternativ oder ergänzend zu den direkt aufgenommenen Umgebungsdaten können somit Daten der direkten Kommunikation zwischen Fahrzeugen (Car2Car) ausgewertet werden. Es kann beispielsweise bestimmt werden, ob der rückwärtige Verkehr auch steht bzw. es eine Bewegung in der Kolonne gibt. Zudem können Informationen über den Fahrer oder das Fahrzeug übermittelt. Vorteilhafterweise könne hierdurch die Umgebungsdaten um solche Daten erweitert werden, die nicht über Sensoren direkt messbar sind.

Das erfindungsgemäße System zur Regelung der Lichtemission einer Fahrzeugleuchte umfasst eine Erfassungseinheit zum Erfassen von in Lichtemissionsrichtung angeordneten Verkehrsteilnehmern und eine Einstelleinheit zum Verändern der Lichtemission der Fahrzeugleuchte. Weiterhin umfasst das System eine Berechnungseinheit zum Erfassen von Reaktionsdaten zur Reaktion des Verkehrsteilnehmers auf die Veränderung der Lichtemission, zur Ermittlung von Prognosedaten, die angeben, welche Reaktion auf die veränderte Lichtemission erwartet wird, sowie zum Vergleichen der erfassten Reaktionsdaten mit den ermittelten Prognosedaten. Eine Regelungseinheit ist ausgebildet bei einer Abweichung der Prognosedaten von den Reaktionsdaten zu ermitteln, welche Anpassung der Lichtemission der Fahrzeugleuchte eine Verringerung der Abweichung prognostiziert und die Lichtemission der Fahrzeugleuchte entsprechend der ermittelten Anpassung zu regeln.

Das erfindungsgemäße System dient insbesondere zum Ausführen des erfindungsgemäßen Verfahrens. Es weist dieselben Vorteile wie das erfindungsgemäße Verfahren auf.

Für den Fahrer des Fahrzeugs kann die berechnete und angewendete Einstellung der Fahrzeugleuchte in einer Kombianzeige im Fahrzeug dargestellt werden. Der Fahrer wird auf diese Weise darüber informiert, welche Lichtanzeige der andere Verkehrsteilnehmer sieht. Der Fahrer kann also die korrekte Funktionsweise der Regelung und somit der Lichtemission überprüfen. Weiterhin wird der Fahrer gewarnt, wenn das System wegen einer Gefahrensituation, die er selbst nicht oder zu spät erkannt hat, ein Gefahrensignal erzeugt hat. Beides erhöht die Sicherheit des Fahrers und der anderen Verkehrsteilnehmer.

Die Darstellung der Lichtemission kann beispielsweise über Symbole der einzelnen Leuchtmittel visualisiert werden, die sobald die Regelung aktiv wird, aufleuchten. Die nach außen angewendete Technik einer vergrößerten Leuchtfläche und/oder einer vergrößerten Helligkeit der Lichtemission kann analog in der Anzeige übernommen werden. Bei besonders hoher Gefahrenschwere kann zusätzliche ein akustisches Warnsignal ertönen.

Aus allen im Verfahren genannten Varianten der Steuerung der Fahrzeugleuchte folgt automatisch eine Steigerung der Energieeffizienz im Vergleich zu Standard-Fahrzeugleuchten ohne Intensitätssteuerung.

Die Erfindung wird nun anhand von Ausführungsbeispielen mit Bezug zu den Zeichnungen erläutert.
- Figur 1: zeigt schematisch die Komponenten des Systems,
- Figur 2: ist ein Flussdiagramm der Verfahrensschritte eines ersten Ausführungsbeispiels des erfindungsgemäßen Verfahrens,

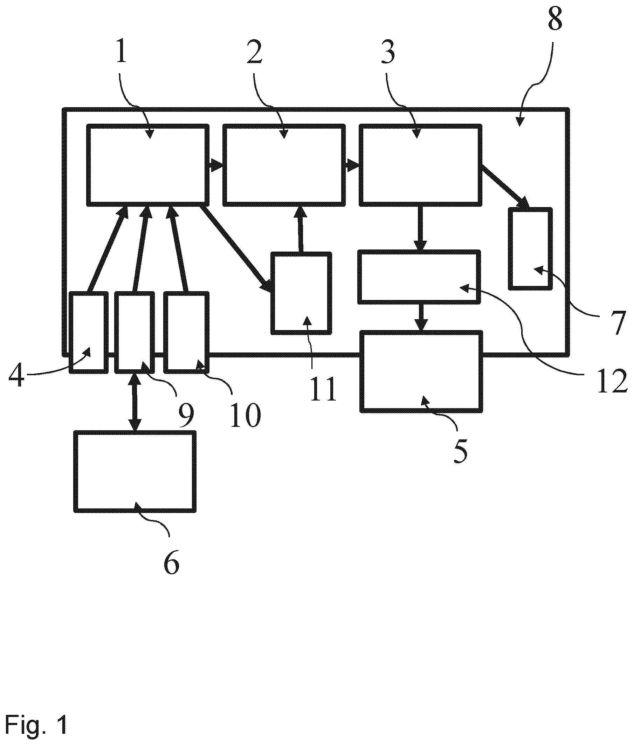

Zunächst wird ein Ausführungsbeispiel der erfindungsgemäßen Vorrichtung mit Bezug zu Figur 1 erläutert:
Die Vorrichtung umfasst eine Vielzahl von Umfeldsensoren 4, die im Fahrzeug 8 angeordnet sind. Diese können Kameras, einen LIDAR-Sensor, einen Radarsensor, einen Ultraschallsensor, einen Regensensor, einen Helligkeitssensor, der die Umgebungshelligkeit im Verkehrsumfeld des Fahrzeugs 8 misst, einen Temperatursensor, einen Luftfeuchtemesser und/oder einen Luftdrucksensor umfassen. Die von diesen Umfeldsensoren 4 erfassten Daten werden an eine Erfassungseinheit 1 als Umgebungsdaten übertragen.

An die Erfassungseinheit 1 werden über die Kommunikationseinheit 9 weitere externe Umgebungsdaten anderer Verkehrsteilnehmer 6 (car2car) oder einer Verkehrsinfrastruktur (car2x) übertragen. Die Erfassungseinheit 1 ist außerdem mit einem Satellitensignalempfänger, beispielsweise einem GPS-(Global-Positioning-System)-Empfänger 10, verbunden, so dass die aktuelle Position des Fahrzeugs 8 ermittelt werden kann. Die von der Erfassungseinheit 1 empfangenen Umgebungsdaten werden an eine Berechnungseinheit 2 übertragen und von dieser weiterverarbeitet.

Aus den Umgebungsdaten berechnet die Berechnungseinheit 2 Reaktionsdaten zur Reaktion des Verkehrsteilnehmers 6 auf eine Veränderung der Lichtemission. Weiterhin erstellt die Berechnungseinheit 2 Prognosedaten die angeben, welche Reaktion auf die veränderte Lichtemission erwartet wird.

Hierfür ist die Berechnungseinheit 2 mit einer internen oder externen Datenbank 11 verbunden. Die Datenbank 11 enthält vorab gesammelte Reaktionsdaten und eine vorab durch ein Verfahren des maschinellen Lernens trainierte künstliche Intelligenz. Die an die Berechnungseinheit 2 übertragenen Umgebungsdaten werden verwendet, um mittels der künstlichen Intelligenz, die das Maschinenlernverfahren verwendet, die Prognosedaten zu erstellen. In der Datenbank 11 werden zudem die mittels der Umgebungsdaten ermittelten Reaktionsdaten gespeichert, um den Datensatz für das Maschinenlernverfahren zu erweitern.

Aus den Umgebungsdaten bestimmt die Berechnungseinheit 2 zudem der Level der Gefahrenschwere. Hierfür werden die in der Datenbank 11 abgelegten Reaktionsdaten verwendet, um mit der künstlichen Intelligenz aus vorherigen Fahrsituationen der richtige Level der Gefahrenschwere zu bestimmen.

Die Berechnungseinheit 2 dient weiterhin dem Vergleichen der erfassten Reaktionsdaten mit den ermittelten Prognosedaten. Das Ergebnis wird an die Regelungseinheit 3 übermittelt, die bei einer Abweichung der Prognosedaten von den Reaktionsdaten ermittelt, welche Anpassung der Lichtemission der Fahrzeugleuchte 5 eine Verringerung der Abweichung prognostiziert.

Die Vorrichtung umfasst außerdem eine Einstelleinheit 12 zum Verändern der Lichtemission einer Fahrzeugleuchte 5. Die Ergebnisse der ermittelten Anpassung der Lichtemission der Fahrzeugleuchte 5 und die entsprechend notwenige Regelung werden an die Einstelleinheit 12 gesendet und die Lichtemission der Fahrzeugleuchte 5 wird von dieser angepasst.

Die Fahrzeugleuchte 5 umfasst Beleuchtungseinrichtungen für eine Schluss-, Brems-, Blink- und Rückfahrleuchte (SBBR) oder eine hochgesetzte Bremsleuchte, eine separate Blinkleuchte und/oder einen Nebenscheinwerfer. Außerdem kann die Fahrzeugleuchte 5 auch als Frontleuchte eingesetzt werden. Die Fahrzeugleuchte 5 umfasst eine Vielzahl von einzelnen lichtemittierenden Dioden (LEDs), von denen einige zu Teilbereichen für bestimmte Lichtfunktionen zusammengefasst werden. Auf diese Weise können von den LEDs Leuchtflächenelemente gebildet werden. Die Einstelleinheit 12 steuert abhängig von der berechneten Regelung die einzelnen LEDs der Fahrzeugleuchte 5 an und verändert auf diese Weise die leuchtende Fläche der Fahrzeugleuchte 5 und die Lichtintensität der Lichtemission der Fahrzeugleuchte 5.

Die Anpassung wird ebenfalls an eine Anzeigeeinheit 7 übermittelt, diese zeigt dem Fahrer die Einstellung der Fahrzeugleuchte 5 an.

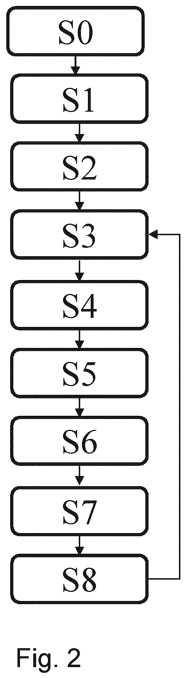

Im Folgenden wird ein Ausführungsbeispiel des erfindungsgemäßen Verfahrens mit Bezug zur Figur 2 erläutert, wobei weitere Details des Ausführungsbeispiels der erfindungsgemäßen Vorrichtung beschrieben werden:
Vor der Ausführung des Verfahrens wird in einem Schritt S0 die künstliche Intelligenz zur Bestimmung des Levels der Gefahrenschwere und der Prognosedaten trainiert. Hierfür werden Reaktionsdaten von Fahrern auf unterschiedliche Fahrsituationen und dazugehörige Umfelddaten gesammelt, in der Datenbank 11 abgelegt und für das Training verwendet.

Während der Fahrt wird in einem ersten Schritt S1 ein in Lichtemissionsrichtung der Fahrzeugleuchte 5 angeordneter Verkehrsteilnehmer 6 erfasst. Der Verkehrsteilnehmer 6 ist ein Fahrer eines Kraftfahrzeugs in Lichtemissionsrichtung der Bremsleuchte, also hinter dem Fahrzeug 8. In einem anderen Ausführungsbeispiel kann der Verkehrsteilnehmer 6 auch ein Fahrradfahrer oder Fußgänger sein und sich auch neben oder vor dem Fahrzeug 8 befinden.

Im einem zweiten Schritt S2 werden Umgebungsdaten mit den Umfeldsensoren 4 erfasst.

Dieser Schritt S2 umfasst unter anderem die Messung der Helligkeit mit einem Helligkeitssensor, die Messung des Abstands zu anderen Verkehrsteilnehmern und das Erfassen der Wetterbedingungen. Aus den Umgebungsdaten wird ein Level der Gefahrenschwere von der Berechnungseinheit 2 ermittelt. In dem Ausführungsbeispiel befindet sich der Fahrer auf der Autobahn bei hohen Geschwindigkeiten. Es ist hell, aber es regnet stark. Aufgrund eines Unfalls in unmittelbarer Nähe muss der Fahrer stark abbremsen. Es wird daher ein hoher Level der Gefahrenschwere bestimmt. Die Bestimmung erfolgt mit Hilfe einer künstlichen Intelligenz, die aus vorherigen Reaktionsdaten und Umfelddaten gelernt hat, die Gefahrenschwere einzuschätzen und welche damit verbunden Einstellung der Fahrzeugleuchte 5 geeignet ist, ein gewünschtes Ergebnis herbei zu führen, z. B. nachfolgende Verkehrsteilnehmer zu warnen.

In darauf folgenden dritten Schritt S3 wird die Lichtemission der Fahrzeugleuchte 5 mit der Einstelleinheit 12 verändert. Der Fahrer bremst und die Bremsleuchte leuchtet auf. Dabei wird die Hälfte der vorhandenen LEDs aktiviert und eine mittlere Helligkeitsstufe gewählt. In einem anderen Ausführungsbeispiel kann die Lichtemissionsveränderung beispielsweise auch durch Blinken oder das Einschalten der Frontleuchte erfolgen.

Im vierten Schritt S4 werden mit der Erfassungseinheit 1 Reaktionsdaten zur Reaktion des Verkehrsteilnehmers 7 auf die Veränderung der Lichtemission erfasst. Diese Informationen stammen von der Sensorik zur Beobachtung des rückwärtigen Verkehrs, beispielsweise Heck-Radar, Ultraschall, Heck-Kamera oder LIDAR, die von den Umfeldsensoren 4 umfasst sind. Sie können aber auch direkt über ein Übermitteln der Bremsaktivität, des Lenkverhaltens oder der Augenbewegung des Verkehrsteilnehmers 6 erfolgen, wenn dieser über eine Kommunikationsschnittstelle verfügt, die Daten mit der Kommunikationsschnittstelle 9 des Fahrzeugs 8 austauschen kann (car2car). Weiterhin kann eine Fronkamera zur Beobachtung des Verkehrsumfeldes verwendet werden. Im Ausführungsbeispiel stellt die Berechnungseinheit 2 anhand der Bilder der Heck-Kamera fest, dass der Verkehrsteilnehmer 6 noch keinen Bremsvorgang eingeleitet hat. Hierbei kann die Berechnungseinheit 2 ferner Daten des Radarsensors und/oder LIDAR-Sensors berücksichtigen.

In einem fünften Schritt S5 werden die Reaktionsdaten in der Datenbank 11 der Berechnungseinheit 2 abgelegt, um den Parametersatz für das Verfahren des maschinellen Lernens zu erweitern. Die Datenbank 11 umfasst bereits zuvor gespeicherte Reaktionsdaten aus anderen Verkehrssituationen, die entweder während der Verwendung des Verfahrens oder vorher gesammelt wurden.

Prognosedaten, die angeben, welche Reaktion auf die veränderte Lichtemission erwartet wird, werden in einem sechsten Schritt S6 ermittelt. Dafür wird auf die Reaktionsdaten der Datenbank 11 zugegriffen und es werden mittels der vorab trainierten künstlichen Intelligenz mittels eines Verfahrens des maschinellen Lernens die Prognosedaten bestimmt. Die Prognosedaten sagen voraus, dass der Verkehrsteilnehmer in Reaktion auf die veränderte Lichtemission stark bremsen müsste.

In einem siebten Schritt S7 werden die Reaktionsdaten mit den Prognosedaten verglichen. Im Ausführungsbeispiel wurden als Reaktionsdaten ein nicht bremsendes Fahrzeug 8 erfasst und als Prognosedaten ein stark bremsendes Fahrzeug 8 vorhergesagt. Es wird demnach eine Abweichung der Prognosedaten von den Reaktionsdaten festgestellt.

Da eine Abweichung festgestellt wurde, wird in einem achten Schritt S8 von der Berechnungseinheit 2 ermittelt, durch welche Anpassung der Lichtemission eine Verringerung der Abweichung prognostiziert wird. Dabei wird zum einen der Level der Gefahrenschwere mit einbezogen. Da dieses als hoch eingestuft wurde, wird eine Vergrößerung der Leuchtfläche oder eine Erhöhung der Helligkeit der leuchtenden LEDs angestrebt.

Zum anderen wird der Kontrast der Lichtemission der Fahrzeugleuchte 5 in der Umgebung bestimmt. Die vom Helligkeitssensor erfasste Helligkeit wird mit der aktuell eingestellten Helligkeit der Fahrzeugleuchte 5 verglichen. Der Kontrast der auf mittlerer Helligkeitsstufe eingestellten Fahrzeugleuchte 5 und der Umgebungshelligkeit wird ermittelt. Es wird festgestellt, dass mit einer höheren Helligkeitsstufe ein besserer Kontrast erzielt werden kann. Das Verfahren des maschinellen Lernens erzeugt passend auf diese Eingaben eine optimierte Einstellung der Lichtemission. In diesem Fall wird die Helligkeit erhöht und die Lichtfläche kontinuierlich auf die größtmögliche Fläche vergrößert.

Die berechnete und angewendete Einstellung der Fahrzeugleuchte 5 wird für den Fahrer in einer Kombianzeige im Fahrzeug 8 dargestellt. Aufgrund der erhöhten Gefahrenschwere ertönt zudem ein akustisches Warnsignal.

Der Ablauf der Regelung wird nun wiederholt. Die neue Einstellung der Lichtemission ist mit dem zuvor beschriebenen Schritt S3 gleichzusetzen. Im Ausführungsbeispiel wird nun aufgrund der Änderung der Lichtemission ein starker Bremsvorgang des Verkehrsteilnehmers 6 detektiert. Der Abstand zwischen den beiden Fahrzeugen vergrößert sich. Die Reaktionsdaten, die nach der neuen Einstellung der Lichtemission erfasst werden, werden gemäß Schritt S5 in der Datenbank 11 abgelegt, um das Verfahren des maschinellen Lernens weiter zu verbessern.

Die Reaktionsdaten stimmen in diesem Fall innerhalb eines vorab festgelegten Toleranzbereichs mit den Prognosedaten überein, es ist also keine weitere Anpassung nötig und das Verfahren wird beendet.

### Bezugszeichenliste

- 1: Erfassungseinheit
- 2: Berechnungseinheit
- 3: Regelungseinheit
- 4: Umfeldsensoren
- 5: Fahrzeugleuchte
- 6: Verkehrsteilnehmer
- 7: Anzeigeeinheit
- 8: Fahrzeug
- 9: Car 2 Car Kommunikationsschnittstelle
- 10: GPS Signal
- 11: Datenbank
- 12: Einstelleinheit

## Patentansprüche

1. Verfahren zur Regelung der Lichtemission einer Fahrzeugleuchte (5) eines Fahrzeugs (8), bei dem
ein in Lichtemissionsrichtung der Fahrzeugleuchte (5) angeordneter Verkehrsteilnehmer (6) erfasst wird, und
die Lichtemission der Fahrzeugleuchte (5) verändert wird,
woraufhin Reaktionsdaten zur Reaktion des Verkehrsteilnehmers (6) auf die Veränderung der Lichtemission erfasst werden,
Prognosedaten ermittelt werden, die angeben, welche Reaktion eines in Lichtemissionsrichtung der Fahrzeugleuchte (5) angeordneten Verkehrsteilnehmers (6) auf die veränderte Lichtemission erwartet wird,
die erfassten Reaktionsdaten mit den ermittelten Prognosedaten verglichen werden, bei einer Abweichung der Prognosedaten von den Reaktionsdaten ermittelt wird, durch welche Anpassung der Lichtemission der Fahrzeugleuchte (5) eine Verringerung der Abweichung prognostiziert wird, und die Lichtemission der Fahrzeugleuchte (5) entsprechend der ermittelten Anpassung geregelt wird
**dadurch gekennzeichnet, dass**
Umgebungsdaten von der Umgebung des Fahrzeugs (8) erfasst werden und mittels der Umgebungsdaten ein Level für die Gefahrenschwere in der Umgebung ermittelt wird, bei der Veränderung der Lichtemission der Fahrzeugleuchte (5) die Lichtintensität der Lichtemission der Fahrzeugleuchte (5) in Abhängigkeit von der ermittelten Gefahrenschwere verändert wird,
sodass die Lichtintensität der Lichtemission der Fahrzeugleuchte (5) entsprechend des Levels der Gefahrenschwere angepasst wird.

2. Verfahren nach Anspruch 1,
**dadurch gekennzeichnet, dass**
beim Verändern der Lichtemission der Fahrzeugleuchte (5) die Lichtintensität von einer Ausgangslichtintensität bis zur Lichtemission entsprechend des Levels der Gefahrenschwere kontinuierlich gesteigert wird.

3. Verfahren nach Anspruch 1,
**dadurch gekennzeichnet, dass**
die Helligkeit in der Umgebung der Fahrzeugleuchte (5) erfasst wird
bei der Veränderung der Lichtemission der Fahrzeugleuchte (5) die Helligkeit der Lichtemission der Fahrzeugleuchte (5) so verändert wird, dass ein bestimmter Kontrast zwischen der Helligkeit der Lichtemission der Fahrzeugleuchte (5) zu der erfassten Helligkeit in der Umgebung der Fahrzeugleuchte (5) erzielt wird

4. Verfahren nach Anspruch 1 und 3,
**dadurch gekennzeichnet, dass**
ein definierter Kontrast in Anhängigkeit von dem Level der Gefahrenschwere eingestellt wird, wobei bei einem höheren Level der Gefahrenschwere ein höherer Kontrast eingestellt wird.

5. Verfahren nach Anspruch 4
**dadurch gekennzeichnet, dass**
die Fahrzeugleuchte (5) eine Fläche mit einer Vielzahl von Leuchtmitteln aufweist und die Lichtintensität über die Helligkeit und/oder die leuchtende Fläche der Fahrzeugleuchte (5) angepasst wird.

6. Verfahren nach Anspruch 1,
**dadurch gekennzeichnet, dass**
zum Ermitteln der Prognosedaten ein Verfahren des maschinellen Lernens eingesetzt wird.

7. Verfahren nach Anspruch 6,
**dadurch gekennzeichnet, dass**
Reaktionsdaten in einer Datenbank (11) gespeichert werden und dass die Reaktionsdaten der Datenbank für das Training des Parametersatzes des Verfahrens des maschinellen Lernens zum Ermitteln der Prognosedaten verwendet werden.

8. Verfahren nach Anspruch 1,
**dadurch gekennzeichnet, dass**
die Reaktionsdaten aus übermittelten Daten über Car2Car Kommunikation (9) ermittelt werden.

9. System zur Regelung der Lichtemission einer Fahrzeugleuchte (5),
mit einer Erfassungseinheit zum Erfassen von in Lichtemissionsrichtung angeordneter Verkehrsteilnehmern (6),
einer Einstelleinheit (12) zum Verändern der Lichtemission der Fahrzeugleuchte (5) und einer Berechnungseinheit (2)
- zum Erfassen von Reaktionsdaten zur Reaktion des Verkehrsteilnehmers (6) auf die Veränderung der Lichtemission,
- zur Ermittlung von Prognosedaten, die angeben, welche Reaktion auf die veränderte Lichtemission erwartet wird,
- zum Vergleichen der erfassten Reaktionsdaten mit den ermittelten Prognosedaten, einer Regelungseinheit (3), die ausgebildet ist bei einer Abweichung der Prognosedaten von den Reaktionsdaten zu ermitteln, welche Anpassung der Lichtemission der Fahrzeugleuchte (5) eine Verringerung der Abweichung prognostiziert und die Lichtemission der Fahrzeugleuchte (5) entsprechend der ermittelten Anpassung zu regeln
**dadurch gekennzeichnet, dass**
Umgebungsdaten von der Umgebung des Fahrzeugs (8) erfassbar sind und mittels der Umgebungsdaten ein Level für die Gefahrenschwere in der Umgebung ermittelbar ist, bei der Veränderung der Lichtemission der Fahrzeugleuchte (5) die Lichtintensität der Lichtemission der Fahrzeugleuchte (5) in Abhängigkeit von der ermittelten Gefahrenschwere veränderbar ist,
sodass die Lichtintensität der Lichtemission der Fahrzeugleuchte (5) entsprechend des Levels der Gefahrenschwere anpassbar ist.

## Claims

1. Method for controlling the light emission of a vehicle lamp (5) of a vehicle (8), in which method
a road user (6) located in the light emission direction of the vehicle lamp (5) is detected, and
the light emission of the vehicle lamp (5) is changed,
whereupon reaction data on the reaction of the road user (6) to the change in the light emission are recorded,
forecast data are determined which indicate the expected reaction of a road user (6) located in the light emission direction of the vehicle lamp (5) to the changed light emission,
the recorded reaction data are compared with the determined forecast data, if the forecast data deviates from the reaction data, it is determined by means of which adjustment of the light emission of the vehicle lamp (5) a prediction of a reduction in the deviation is made, and the light emission of the vehicle lamp (5) is controlled according to the determined adjustment
**characterized in that**
environmental data from the surroundings of the vehicle (8) are recorded and a level for the hazard severity in the surroundings is determined using the environmental data, if the light emission of the vehicle lamp (5) changes, the light intensity of the light emission of the vehicle lamp (5) is changed depending on the determined hazard severity,
so that the light intensity of the light emission of the vehicle lamp (5) is adjusted according to the level of hazard severity.

2. Method according to claim 1,
**characterized in that**
when the light emission of the vehicle lamp (5) is changed, the light intensity is continuously increased from an initial light intensity to the light emission according to the level of hazard severity.

3. Method according to claim 1,
**characterized in that**
the brightness in the surroundings of the vehicle lamp (5) is measured,
when the light emission of the vehicle lamp (5) is changed, the brightness of the light emission of the vehicle lamp (5) is changed such that a specific contrast is achieved between the brightness of the light emission of the vehicle lamp (5) and the measured brightness in the surroundings of the vehicle lamp (5)

4. Method according to claim 1 and 3,
**characterized in that**
a defined contrast is set depending on the level of hazard severity, with a higher contrast being set at a higher level of hazard severity.

5. Method according to claim 4,
**characterized in that**
the vehicle lamp (5) has a surface comprising a plurality of light sources and the light intensity is adjusted via the brightness and/or the luminous surface of the vehicle lamp (5).

6. Method according to claim 1,
**characterized in that**
a machine learning method is used to determine the forecast data.

7. Method according to claim 6,
**characterized in that**
reaction data are stored in a database (11) **and in that** the reaction data of the database are used for training the parameter set of the machine learning method for determining the forecast data.

8. Method according to claim 1,
**characterized in that**
the reaction data are determined from transmitted data via Car2Car communication (9).

9. System for controlling the light emission of a vehicle lamp (5),
having a detection unit for detecting road users (6) located in the direction of light emission,
an adjustment unit (12) for changing the light emission of the vehicle lamp (5) and a calculation unit (2)
- for recording reaction data on the reaction of the road user (6) to the change in the light emission,
- for determining forecast data indicating the expected reaction to the changed light emission,
- for comparing the recorded reaction data with the determined forecast data, a control unit (3) which is designed to determine, in the event of a deviation of the forecast data from the reaction data, which adjustment of the light emission of the vehicle lamp (5) predicts a reduction of the deviation and to control the light emission of the vehicle lamp (5) according to the determined adjustment
**characterized in that**
environmental data from the surroundings of the vehicle (8) can be recorded and a level for the hazard severity in the surroundings can be determined using the environmental data, if the light emission of the vehicle lamp (5) is changed, the light intensity of the light emission of the vehicle lamp (5) can be changed depending on the determined hazard severity,
so that the light intensity of the light emission of the vehicle lamp (5) can be adjusted according to the level of hazard severity.

## Revendications

1. Procédé permettant la régulation de l'émission lumineuse d'un phare de véhicule (5) d'un véhicule (8), dans lequel
un usager de la voie publique (6) situé dans la direction d'émission lumineuse du phare de véhicule (5) est détecté, et
l'émission lumineuse du phare de véhicule (5) est modifiée,
après quoi des données de réaction concernant la réaction de l'usager de la voie publique (6) à la modification de l'émission lumineuse sont détectées,
des données de pronostic sont déterminées, lesquelles indiquent quelle réaction est attendue d'un usager de la voie publique (6) situé dans la direction d'émission lumineuse du phare de véhicule (5) à l'émission lumineuse modifiée,
les données de réaction détectées sont comparées aux données de pronostic déterminées, en cas d'écart entre les données de pronostic et les données de réaction, on détermine par quelle adaptation de l'émission lumineuse du phare de véhicule (5) une réduction de l'écart est pronostiquée, et l'émission lumineuse du phare de véhicule (5) est réglée en fonction de l'adaptation déterminée
**caractérisé en ce que**
des données d'environnement sont détectées par l'environnement du véhicule (8) et un niveau pour la gravité de danger dans l'environnement est déterminé au moyen des données d'environnement, lors de la modification de l'émission lumineuse du phare de véhicule (5), l'intensité lumineuse de l'émission lumineuse du phare de véhicule (5) est modifiée en fonction de la gravité de danger déterminée,
de sorte que l'intensité lumineuse de l'émission lumineuse du phare de véhicule (5) est adaptée en fonction du niveau de gravité de danger.

2. Procédé selon la revendication 1,
**caractérisé en ce que**
lors de la modification de l'émission lumineuse du phare de véhicule (5), l'intensité lumineuse est augmentée en continu depuis une intensité lumineuse initiale jusqu'à l'émission lumineuse correspondant au niveau de gravité de danger.

3. Procédé selon la revendication 1,
**caractérisé en ce que**
la luminosité dans l'environnement du phare de véhicule (5) est détectée
lors de la modification de l'émission lumineuse du phare de véhicule (5), la luminosité de l'émission lumineuse du phare de véhicule (5) est modifiée de sorte qu'un contraste établi entre la luminosité de l'émission lumineuse du phare de véhicule (5) et la luminosité détectée dans l'environnement du phare de véhicule (5) est obtenu

4. Procédé selon la revendication 1 et 3,
**caractérisé en ce que**
un contraste défini est réglé en fonction du niveau de gravité de danger, dans lequel un contraste plus élevé est réglé pour un niveau plus élevé de gravité de danger.

5. Procédé selon la revendication 4
**caractérisé en ce que**
le phare de véhicule (5) présente une surface comportant une pluralité de moyens d'éclairage et l'intensité lumineuse est adaptée par l'intermédiaire de la luminosité et/ou de la surface éclairante du phare de véhicule (5).

6. Procédé selon la revendication 1,
**caractérisé en ce que**
un procédé d'apprentissage automatique est utilisé pour la détermination des données de pronostic.

7. Procédé selon la revendication 6,
**caractérisé en ce que**
des données de réaction sont mémorisées dans une base de données (11) et **en ce que** les données de réaction de la base de données sont utilisées pour l'entraînement du jeu de paramètres du procédé d'apprentissage automatique pour la détermination des données de pronostic.

8. Procédé selon la revendication 1,
**caractérisé en ce que**
les données de réaction sont déterminées à partir de données transmises par l'intermédiaire de la communication Car2Car (9).

9. Système permettant la régulation de l'émission lumineuse d'un phare de véhicule (5),
comportant une unité de détection permettant de détecter des usagers de la voie publique (6) situés dans la direction d'émission lumineuse,
une unité de réglage (12) permettant de modifier l'émission lumineuse du phare de véhicule (5) et une unité de calcul (2)
- permettant de détecter des données de réaction concernant la réaction de l'usager de la voie publique (6) à la modification de l'émission lumineuse,
- permettant de déterminer des données de pronostic indiquant quelle réaction est attendue à l'émission lumineuse modifiée,
- permettant la comparaison des données de réaction détectées avec les données de pronostic déterminées, une unité de régulation (3) qui est configurée pour, en cas d'écart entre les données de pronostic et les données de réaction, déterminer quelle adaptation de l'émission lumineuse du phare de véhicule (5) pronostique une réduction de l'écart, et pour réguler l'émission lumineuse du phare de véhicule (5) en fonction de l'adaptation déterminée
**caractérisé en ce que**
des données d'environnement peuvent être détectées par l'environnement du véhicule (8) et un niveau pour la gravité de danger dans l'environnement peut être déterminé au moyen des données d'environnement, lors de la modification de l'émission lumineuse du phare de véhicule (5), l'intensité lumineuse de l'émission lumineuse du phare de véhicule (5) peut être modifiée en fonction de la gravité de danger déterminée,
de sorte que l'intensité lumineuse de l'émission lumineuse du phare de véhicule (5) peut être adaptée en fonction du niveau de gravité de danger.
